(19) Europäisches Patentamt
European Patent Office
Office européen des brevets

(11) **EP 4 467 672 A1**

(12) **EUROPEAN PATENT APPLICATION**
published in accordance with Art. 153(4) EPC

(43) Date of publication:
**27.11.2024 Bulletin 2024/48**

(21) Application number: **23754993.6**

(22) Date of filing: **25.04.2023**

(51) International Patent Classification (IPC):
**C22B 19/32** (2006.01)   **C22B 19/02** (2006.01)
**C22B 3/06** (2006.01)

(52) Cooperative Patent Classification (CPC):
**C22B 3/06; C22B 19/02; C22B 19/32;** Y02P 10/20

(86) International application number:
**PCT/KR2023/005611**

(87) International publication number:
**WO 2023/234562 (07.12.2023 Gazette 2023/49)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **03.11.2022 KR 20220145379**

(71) Applicant: **Korea Zinc Co., Ltd.**
**Seoul 06110 (KR)**

(72) Inventors:
• **KIM, Min Cheol**
  **542 Seoul (KR)**
• **CHOI, Heon Sik**
  **3101 Ulsan (KR)**

(74) Representative: **Angerhausen, Christoph**
**Boehmert & Boehmert**
**Anwaltspartnerschaft mbB**
**Pettenkoferstrasse 22**
**80336 München (DE)**

(54) **METHOD FOR REMOVING CHLORINE IN ZINC HYDROMETALLURGY**

(57) The present disclosure provides a method for removing chlorine from a process solution in zinc hydrometallurgy, the method comprising: a step for preparing the process solution from a leaching process of leaching a zinc calcine; a step for introducing the process solution to a reactor and introducing a lead concentrate into the reactor while blowing-in oxygen; a step for solid-liquid separating of a slurry in a filtration tank, the slurry being produced in the reactor; and a step for post-processing a filtrate and a lead concentrate residue separated in the step for solid-liquid separating, wherein chlorine ions in the process solution and silver contained in the lead concentrate react with each other in the reactor to precipitate a silver chloride.

## FIG. 2

```
┌─────────────────────────────────────────┐
│  A step for preparing process solution   │───── S100
└─────────────────────────────────────────┘
                    │
                    ▼
┌─────────────────────────────────────────┐
│   A step for introducing lead concentrate │───── S200
└─────────────────────────────────────────┘
                    │
                    ▼
┌─────────────────────────────────────────┐
│    A step for solid-liquid separating     │───── S300
└─────────────────────────────────────────┘
                    │
                    ▼
┌─────────────────────────────────────────┐
│        A step for post-processing         │
│   filtrate and lead concentrate residue   │───── S400
└─────────────────────────────────────────┘
```

EP 4 467 672 A1

**Description**

TECHNICAL FIELD

The present disclosure relates to a method for removing chlorine in zinc hydrometallurgy.

BACKGROUND

Methods for obtaining zinc from a zinc concentrate include a pyrometallurgical method and a hydrometallurgical method. The hydrometallurgical method extracts high-purity zinc from a zinc concentrate through a roasting process, a leaching process, a purification process, and an electrowinning process.

The electrowinning process is very sensitive to many kinds of impurities, and therefore, it is necessary to remove the impurities to an appropriate level or less in the leaching process and/or the purification process. Among these impurities, chlorine accelerates corrosion of various metallic equipment and results in the generation of a chlorine gas in an electrolytic cell, so that a concentration thereof needs to be maintained at an appropriate level or less. However, it is very difficult to remove chlorine in the leaching process and the purification process. Accordingly, adjustment in the concentration of chlorine needs to be controlled by lowering the amount of raw material introduced in the hydrometallurgical process. However, this makes it difficult to process various raw materials in zinc hydrometallurgy, and in particular, causes problematic processing of secondary raw materials with a high content of chlorine generated in the recycling of zinc.

SUMMARY

An object of the present disclosure is to remove chlorine, contained in a process solution, to an appropriate level using a lead concentrate in a leaching process of a zinc hydrometallurgical method, thereby restricting the generation of a gas in an electrolytic cell in a subsequent electrowinning process, preventing equipment corrosion, and enabling the processing of various kinds of zinc concentrates and secondary raw materials generated in the recycling of zinc.

One embodiment of the present disclosure provides a method for removing chlorine from a process solution in zinc hydrometallurgy, the method comprising: a step for preparing the process solution from a leaching process of leaching a zinc calcine; a step for introducing the process solution to a reaction tank and introducing a lead concentrate into the reaction tank while blowing-in oxygen; a step for solid-liquid separating of a slurry in a filtration tank, the slurry being produced in the reaction tank; and a step for post-processing a filtrate and a lead concentrate residue separated in the step for solid-liquid separating, wherein chlorine ions in the process solution and silver contained in the lead concentrate react with each other in the reaction tank to precipitate a silver chloride.

One embodiment of the present disclosure provides the method in which the lead concentrate residue is smelted in a lead smelting process.

One embodiment of the present disclosure provides the method in which the leaching process includes a neutral leaching process, a weak acid leaching process, a hot acid leaching process, and a super hot acid leaching process, and in which the process solution is supernatant of a precipitation tank of the super hot acid leaching process.

One embodiment of the present disclosure provides the method in which the filtrate is introduced into the hot acid leaching process.

One embodiment of the present disclosure provides the method in which the lead concentrate contains 0.1 wt% or more of silver (Ag), 6 wt% or more of zinc (Zn), and 3 wt% or more of copper (Cu).

One embodiment of the present disclosure provides the method in which the lead concentrate has a particle size of 50 $\mu$m or less.

One embodiment of the present disclosure provides the method in which the oxygen is blown into the reactor at a flow rate of 100 to 400 Nm$^3$/hr.

One embodiment of the present disclosure provides the method in which the lead concentrate has a pulp concentration ranging from 80 to 150 g/L.

One embodiment of the present disclosure provides a method for removing chlorine from a process solution in zinc hydrometallurgy, the method comprising: a roasting process of forming a calcine from a zinc concentrate; a leaching process of forming a leachate from the calcine; a chlorine removing process of removing chlorine from a portion of the process solution of the leaching process by using a lead concentrate; a purification process of removing impurities in the leachate; and an electrowinning process of forming zinc from an electrolyte after the purification process.

One embodiment of the present disclosure provides the method in which the chlorine removing process includes introducing the process solution into a reactor and introducing the lead concentrate into the reactor while blowing-in oxygen.

The present disclosure is capable of preventing corrosion by chlorine ions occurring throughout a refinery and the generation of a harmful gas in an electrowinning process by lowering a concentration of chlorine contained in a process solution in a zinc hydrometallurgical method. Further, it is possible to process zinc concentrates or secondary raw materials with a high content of chlorine, which may contribute to resource circulation. Furthermore, an economical zinc hydrometallurgical process may be provided since a large amount of zinc contained in a lead concentrate may be recovered.

BRIEF DESCRIPTION OF THE DRAWINGS

FIG. 1 is a process flowchart illustrating a zinc hydrometallurgical method according to one embodiment of the present disclosure.
FIG. 2 is a process flowchart illustrating a chlorine removing process of the zinc hydrometallurgical method according to the embodiment of the present disclosure.
FIG. 3 is a view illustrating the chlorine removing process of the zinc hydrometallurgical method according to the embodiment of the present disclosure.

DETAILED DESCRIPTION

Embodiments of the present disclosure are illustrated for describing the technical scope of the present disclosure. The scope of a right according to the present disclosure is not limited to the embodiments presented below or to the detailed descriptions of these embodiments.

Hereinafter, the present disclosure will be described with reference to the drawings.

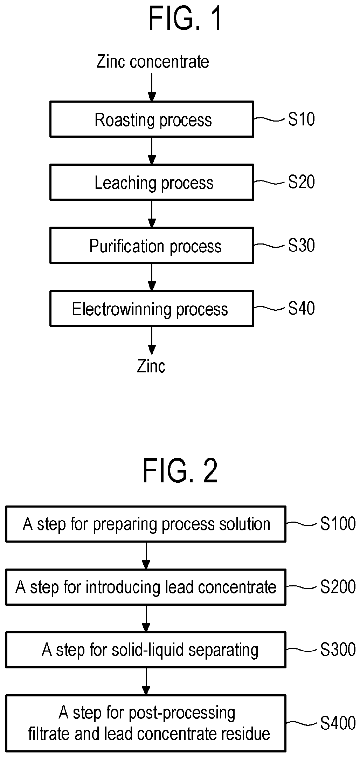

Referring to FIG. 1, a zinc hydrometallurgical method may include a roasting process S10, a leaching process S20, a purification process S30, and an electrowinning process S40.

A zinc concentrate may be introduced into the roasting process S10. The roasting process S10 is a process of changing the zinc concentrate, which exists as a sulfide, into an oxide using heat and oxygen, thereby producing a calcine.

The leaching process S20 is a process of dissolving the calcine, produced in the roasting process S10, in an acid solution such as sulfuric acid to produce a zinc leachate. In the leaching process S20, a spent electrolyte resulting from the electrowinning process S40 may be used. In one example embodiment, the leaching process S20 may be performed in several steps in order to maximize the leaching rate of zinc and to minimize the dissolution of impurities. In the leaching process S20 performed in several steps, the spent electrolyte, calcine, and unreacted calcine may have countercurrent flows. The leaching process S20 may include a neutral leaching process, a weak acid leaching process, a hot acid leaching process, and a super hot acid leaching process.

In one example embodiment, a residue from the neutral leaching process may be introduced into the weak acid leaching process, a residue from the weak acid leaching process may be introduced into the hot acid leaching process, and a residue from the hot acid leaching process may be introduced into the super hot acid leaching process. In one example embodiment, a filtrate of the neutral leaching process is introduced into the purification process S30. Further, a filtrate of at least one process of the weak acid leaching process, the hot acid leaching process, and the super hot acid leaching process may be introduced into the neutral leaching process and/or another subsequent process.

The purification process S30 is a process of removing impurities excluding zinc from the leachate produced in the leaching process S20. A solution after the purification process S30 is used as an electrolyte in the electrowinning process S40.

The electrowinning process S40 is a process of electrodepositing zinc from the electrolyte containing a zinc sulfate onto a negative electrode.

FIG. 2 is a process flowchart illustrating a chlorine removing process of the zinc hydrometallurgical method according to the embodiment of the present disclosure.

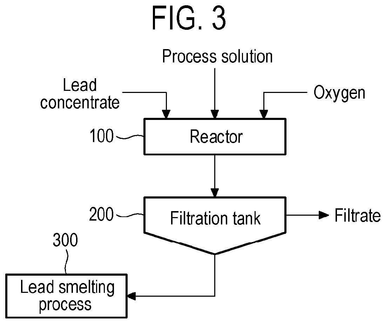

FIG. 3 is a view illustrating the chlorine removing process of the zinc hydrometallurgical method according to the embodiment of the present disclosure.

Referring to FIGS. 2 and 3, the chlorine removing process may include a step S100 for preparing a process solution, a step S200 for introducing lead concentrate, a step S300 for Solid-Liquid Separating, and a step S400 for post-processing filtrate and lead concentrate residue.

**A step S100 for preparing process solution**

First, a process solution suitable for removing chlorine may be prepared from the zinc hydrometallurgical method. The process solution suitable for removing chlorine may be a supernatant of a precipitation tank of any one process among the neutral leaching process, the weak acid leaching process, the hot acid leaching process, and the super hot acid leaching process of the leaching process S20 of FIG. 1. For example, the process solution suitable for removing chlorine may be a supernatant of a precipitation tank of the super hot acid leaching process. The process solution may be introduced into a reactor 100 as illustrated in FIG. 3.

The supernatant of the precipitation tank of the super hot acid leaching process may contain sulfuric acid having a concentration of 70 to 120 g/L and may contain chlorine having a concentration of 0.4 to 0.7 g/L. The supernatant of the precipitation tank of the hot acid leaching process may contain sulfuric acid having a concentration of 20 to 70 g/L, pH of the supernatant of the precipitation tank of the weak acid leaching process may be a range of 1.5 to 3, and pH of the supernatant of the precipitation tank of the neutral leaching process may be a range of 3.5 to 5. However, the concentration of sulfuric acid and the concentration of chlorine in the process solution may depend on a refinery.

Since a lot of lead concentrate is required when using the entire process solution, an appropriate amount of lead concentrate may be used to efficiently remove chlorine by controlling the flow rate of the process solution according to the degree to which chlorine is to be removed.

For example, by preparing only some process solution of the several steps of the leaching process S20 (i.e., the supernatant of the precipitation tank of the super hot acid leaching process) and appropriately controlling the flow rate thereof, it is possible to prevent an unnecessarily large amount of lead concentrate from being introduced. When a portion (e.g., about 50%) of the supernatant of the precipitation tank of the super hot acid leaching process is introduced into the reactor 100 to remove chlorine by a predetermined percentage, the amount of lead concentrate to be introduced may be reduced compared to a case where the entire supernatant of the precipitation tank of the super hot acid leaching process is introduced into the reactor 100 to remove chlorine by a predetermined percentage. In another embodiment, it is also possible to introduce the entire supernatant of the precipitation tank of the super hot acid leaching process to the reactor 100 to remove chlorine.

## A step 5200 for introducing lead concentrate

A lead concentrate may be introduced into the reactor 100. The introduction of the lead concentrate into the reactor 100 may be performed while blowing-in oxygen. In the reactor 100, chlorine (Cl) ions in the solution and a silver (Ag) component contained in the lead concentrate may react with each other, causing precipitation of a silver chloride (AgCl). In this case, a concentration of chlorine (Cl) ions in the solution within the reactor 100 is reduced. The reaction between chlorine and silver may be represented by the following equation.

[Equation]

$$Ag^+ + Cl^- = AgCl$$

A reaction temperature within the reactor 100 may range from 80 to 95 degrees C, and a reaction time may range from 5 to 20 hours. A pulp concentration of the lead concentrate may range from 80 to 150 g/L. The pulp concentration of the lead concentrate is the amount of lead concentrate introduced into the reactor 100 per 1L of the process solution. Oxygen may be supplied to the reactor 100 through a general bottom blowing-in method and may be blown-in at various flow rates depending on the size of the reactor 100. For example, when the reactor 100 has a size of about 250 m$^3$, the oxygen may be blown into the reactor 100 at a flow rate of about 100 to 200 Nm$^3$/hr or about 100 to 400 Nm$^3$/hr. The oxygen may be introduced into the reactor 100 for the purpose of dissolving copper and zinc components contained in the lead concentrate.

If the pulp concentration of the lead concentrate is less than 80 g/L, the removal efficiency of chlorine may decrease, and if the pulp concentration of the lead concentrate is greater than 150 g/L, the amount of the introduced lead concentrate may unnecessarily increase.

The lead concentrate may be a common lead concentrate but may be one having a relatively high content of silver (Ag) and may also be one having a relatively high content of zinc and a relatively high content of copper. Since silver (Ag) is directly combined with chlorine in the process solution, it may have a high content in order to improve the removal efficiency of chlorine. Zinc and copper contained in the lead concentrate are elements harmful to lead smelting but may be recovered in a subsequent process even if the contents thereof are high. A lead concentrate residue after the zinc and the copper are dissolved in the process solution is also advantageous for lead smelting since the contents of zinc and copper are reduced therein.

The zinc and copper components contained in the lead concentrate give difficulty in the smelting of the lead concentrate by a pyrometallurgical process. However, 80 to 95% of each of the zinc and copper components may be dissolved in the reactor 100, and thus, the lead concentrate residue has a reduced content of the zinc and copper components, so that the lead smelting of the lead concentrate residue may be easier. Further, the dissolved zinc and copper components may be recovered in a subsequent zinc hydrometallurgical process, which may provide an economical zinc hydrometallurgical process.

The lead concentrate may contain 0.1 wt% or more of silver (Ag). If the content of silver contained in the lead concentrate is less than 0.1 wt%, the effect of removing chlorine in the process solution is deteriorated.

The lead concentrate may contain 6 wt% or more of zinc (Zn). If the content of zinc contained in the lead concentrate is less than 6 wt%, the effect of recovering zinc in a subsequent process is low.

The lead concentrate may contain 3 wt% or more of copper (Cu). If the content of copper contained in the lead concentrate is less than 3 wt%, the effect of recovering copper in a subsequent process is low.

The lead concentrate may have a fine particle size. For example, the particle size of the lead concentrate may be 50 μm or less. If the particle size of the lead concentrate is large, the lead concentrate may be less responsive, resulting in deterioration in the removal rate of chlorine, the recovery rate of zinc, and the recovery rate of copper.

In order to increase the acidity of the liquid within the reactor 100 in the step S200 for introducing the lead concentrate, it is also possible to introduce the spent electrolyte produced in the electrowinning process S40 of FIG. 1 into the reactor 100. The increased acidity of the liquid within the reactor 100 may increase the dissolution rates of zinc and copper.

Although a lead (Pb) component in the lead concentrate is not dissolved by sulfuric acid but partially changes from a sulfide to a sulfate, this does not cause any problem in a subsequent lead smelting process 300.

## A step S300 for Solid-Liquid Separating

A slurry after the reaction is subjected to a solid-liquid separation by a filtration facility and is separated into a filtrate and the lead concentrate residue. In one embodiment, the slurry may pass through a precipitation tank before being filtered. The filtration facility may be a general filter press, but is not limited thereto, and other types of solid-liquid separating facilities may also be used.

## A step S400 for post-processing filtrate and lead concentrate residue

The filtrate after the reaction may be significantly reduced in the concentration of chlorine and may be slightly increased in the concentrations of zinc and copper, compared to the initial solution. The filtrate after the reaction may be introduced into the hot acid leaching process having the second highest acidity comparing to the super hot acid leaching process having the highest acidity. After that, since the concentration of chlorine in the electrolyte has been reduced in the electrowinning process, it is possible to restrict gas generation in the electrolytic cell, to prevent equipment corrosion, and to enable the processing of various kinds of zinc concentrates and secondary raw materials generated in the recycling of zinc.

The lead concentrate residue after the reaction may be smelted in the lead smelting process 300. Since the lead concentrate residue has the reduced contents of zinc and copper, it may be advantageous upon smelting by a dry method. Although the lead concentrate residue contains a slightly increased concentration of chlorine, but does not significantly affect the lead smelting process 300, there is no difficulty in lead smelting.

According to the exemplary embodiment of the present disclosure, it is capable of preventing corrosion by chlorine ions occurring throughout a refinery and generation of harmful gases in a electrowinning process by lowering a concentration of chlorine contained in a process solution in zinc hydrometallurgy. Further, it is possible to process zinc concentrates or secondary raw materials with a high content of chlorine, which may contribute to resource circulation. Furthermore, it is possible to recover a large amount of zinc contained in a lead concentrate, which may provide an economical zinc smelting method.

## Example 1 and Example 2

In a leaching process of a zinc smelting method, 2L of a process solution and 300g of a lead concentrate were reacted at 90 degrees C for 16 hours while blowing oxygen into a reactor, and then were filtered. A concentration of a chlorine (Cl) component contained in a filtrate after filtration was measured. In Comparative Examples 1 and 2, except for the component content and particle size of the lead concentrate, other conditions were the same as in Examples 1 and 2. In the examples and comparative examples, chlorine concentration of filtrate and removal rate of chlorine are compared in the table 1.

In Example 1 and Example 2, the process solution containing chlorine (Cl) with a concentration of 0.568 g/L, zinc (Zn) with a concentration of 92 g/L, and sulfuric acid with a concentration of 126 g/L was used.

In Example 1, a lead concentrate A containing 51.1 wt% of lead (Pb), 0.4 wt% of silver (Ag), 6.3 wt% of zinc (Zn), and 3.7 wt% of copper (Cu) was used.

In Example 2, a lead concentrate B containing 29.4 wt% of lead (Pb), 0.3 wt% of silver (Ag), 13.7 wt% of zinc (Zn), and 1.9 wt% of copper (Cu) was used.

The results obtained as described above are shown in the following table 1.

[Table 1]

| | Component | Example 1 | Example 2 | Comparative Example 1 | Comparative Example 2 |
|---|---|---|---|---|---|
| Component Concentration (g/L) of Process solution | Cl | 0.568 | 0.568 | 0.568 | 0.568 |
| | Zn | 92 | 92 | 92 | 92 |
| | $H_2SO_4$ | 126 | 126 | 126 | 126 |
| Component Content(wt%) of Lead Concentrate | Pb | 51.1 | 29.4 | 55.2 | 54.3 |
| | Ag | 0.4 | 0.3 | 0.05 | 0.3 |
| | Zn | 6.3 | 13.7 | 6.4 | 5.8 |
| | Cu | 3.7 | 1.9 | 2.1 | 2.2 |
| Particle size ($\mu$m) of lead concentrate | | 35 | 42 | 40 | 85 |
| Chlorine Concentration (g/L) of Filtrate after Filtration | | 0.094 | 0.211 | 0.522 | 0.487 |
| Removal rate (%) of chlorine | | 83.5 | 62.9 | 8.1 | 14.3 |

When the particle size of the lead concentrate is as large as 85 $\mu$m as in Comparative Example 2, the removal rate of chlorine is 14.3 %, whereas when the particle size of the lead concentrate is 50 $\mu$m or less as in Examples 1 and 2, the removal rate of chlorine is higher than Comparative Example 2. When the silver contained in the lead concentrate was 0.05 % by weight as in Comparative Example 1, the removal rate of chlorine was 8.1%, whereas when the silver contained in the lead concentrate was 0.1 % by weight or more as in examples 1 and 2, the removal rate of chlorine is higher than Comparative Example 1.

Further, Example 1 using the lead concentrate having a higher content of silver had a higher removal rate of chlorine in the process solution than Example 2.

Although the embodiments of the present disclosure have been described with reference to the accompanying drawings, those skilled in the art to which the present disclosure pertains can understand that the present disclosure may be implemented in other specific forms without changing the technical scope or essential features of the present disclosure.

Therefore, the embodiments described above should be understood as illustrative in all respects and not limiting. The scope of the present disclosure is indicated by the appended claims rather than the detailed description, and all changes or modifications derived from the meaning and scope of the claims and equivalent concepts thereof should be construed as being included in the scope of the present disclosure.

**Claims**

1. A method for removing chlorine from a process solution in zinc hydrometallurgy, the method comprising:

    a step for preparing the process solution from a leaching process of leaching a zinc calcine;
    a step for introducing the process solution to a reactor and introducing a lead concentrate into the reactor while blowing-in oxygen;
    a step for solid-liquid separating of a slurry in a filtration tank, the slurry being produced in the reactor; and
    a step for post-processing a filtrate and a lead concentrate residue separated in the step for solid-liquid separating,
    wherein chlorine ions in the process solution and silver contained in the lead concentrate react with each other in the reactor to precipitate a silver chloride.

2. The method of claim 1, wherein the lead concentrate residue is smelted in a lead smelting process.

3. The method of claim 1, wherein the leaching process includes a neutral leaching process, a weak acid leaching process, a hot acid leaching process, and a super hot acid leaching process, and
    wherein the process solution is supernatant of a precipitation tank of the super hot acid leaching process.

4. The method of claim 3, wherein the filtrate is introduced into the hot acid leaching process.

5. The method of claim 1, wherein the lead concentrate contains 0.1 wt% or more of silver (Ag), 6 wt% or more of zinc (Zn), and 3 wt% or more of copper (Cu).

6. The method of claim 1, wherein the lead concentrate has a particle size of 50 $\mu$m or less.

7. The method of claim 1, wherein the oxygen is blown into the reactor at a flow rate of 100 to 400 Nm$^3$/hr.

8. The method of claim 1, wherein the lead concentrate has a pulp concentration ranging from 80 to 150 g/L.

9. A method for removing chlorine from a process solution in zinc hydrometallurgy, the method comprising:

a roasting process of forming a calcine from a zinc concentrate;
a leaching process of forming a leachate from the calcine;
a chlorine removing process of removing chlorine from a portion of the process solution of the leaching process by using a lead concentrate;
a purification process of removing impurities in the leachate; and
an electrowinning process of forming zinc from an electrolyte after the purification process.

10. The method of claim 9, wherein the chlorine removing process includes introducing the process solution into a reactor and introducing the lead concentrate into the reactor while blowing-in oxygen.

# FIG. 1

Zinc concentrate

Roasting process —S10

Leaching process —S20

Purification process —S30

Electrowinning process —S40

Zinc

# FIG. 2

A step for preparing process solution —S100

A step for introducing lead concentrate —S200

A step for solid-liquid separating —S300

A step for post-processing
filtrate and lead concentrate residue —S400

# FIG. 3

## INTERNATIONAL SEARCH REPORT

| International application No. |
|---|
| **PCT/KR2023/005611** |

| A. | CLASSIFICATION OF SUBJECT MATTER |
|---|---|

**C22B 19/32**(2006.01)i; **C22B 19/02**(2006.01)i; **C22B 3/06**(2006.01)i

According to International Patent Classification (IPC) or to both national classification and IPC

| B. | FIELDS SEARCHED |
|---|---|

Minimum documentation searched (classification system followed by classification symbols)

C22B 19/32(2006.01); C22B 13/02(2006.01); C22B 19/00(2006.01); C22B 19/30(2006.01); C22B 3/04(2006.01); C22B 3/08(2006.01); C22B 7/00(2006.01); C22B 7/02(2006.01); C25B 15/08(2006.01); C25C 1/16(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 아연(zinc), 침출(leaching), 염소제거(chlorine removal), 연정광(lead concentrates)

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | KR 10-1980-0001411 B1 (LEE, Keun Bok) 05 December 1980 (1980-12-05)<br>See paragraphs [0003], [0008] and [0013] and claim 1. | 1-10 |
| Y | JP 2008-081766 A (DOWA HOLDINGS CO., LTD.) 10 April 2008 (2008-04-10)<br>See paragraphs [0012], [0017] and [0029] and claims 2 and 5. | 1-10 |
| Y | JP 03-024238 A (DOWA MINING CO., LTD.) 01 February 1991 (1991-02-01)<br>See claim 2. | 1-10 |
| A | JP 2006-257540 A (DOWA MINING CO., LTD.) 28 September 2006 (2006-09-28)<br>See claims 1, 4 and 8. | 1-10 |
| A | KR 10-0926238 B1 (SE POONG INDUSTRIAL CORP.) 09 November 2009 (2009-11-09)<br>See claim 1. | 1-10 |

☐ Further documents are listed in the continuation of Box C.    ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **19 July 2023** | **19 July 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
**Information on patent family members**

International application No.

**PCT/KR2023/005611**

| Patent document cited in search report | | | Publication date (day/month/year) | Patent family member(s) | | | Publication date (day/month/year) |
|---|---|---|---|---|---|---|---|
| KR | 10-1980-0001411 | B1 | 05 December 1980 | None | | | |
| JP | 2008-081766 | A | 10 April 2008 | JP | 5176053 | B2 | 03 April 2013 |
| JP | 03-024238 | A | 01 February 1991 | None | | | |
| JP | 2006-257540 | A | 28 September 2006 | JP | 4635231 | B2 | 23 February 2011 |
| KR | 10-0926238 | B1 | 09 November 2009 | None | | | |

Form PCT/ISA/210 (patent family annex) (July 2022)